# EUROPEAN PATENT APPLICATION

(11) **EP 2 060 170 A1**
(43) Date of publication of application: **20.05.2009**
(21) Application number: 07254477.8
(22) Date of filing: 16.11.2007
(51) Int. Cl.: A01K 1/12

(54) **A milking parlour and method for operating the same**

(71) Applicant: DeLaval Holding AB, 147 21 Tumba (SE)
(72) Inventor: Danneker, Gert, 147 92 Grödinge (SE); Axelsson, Thomas, 123 52 Farsta (SE); Eriksson, Jan, 147 63 Uttran (SE)
(74) Representative: Bennett, Adrian Robert J.

(57) **Abstract**

The present invention relates to a milking parlour and a method for operating the same. A milking parlour is provided as comprising a robotic manipulation device having a robot arm (25) and a milking stall (5) provided on a platform (3) movable relative to the robotic manipulation device. The milking parlour further comprises an extendible element (34) with which the robotic manipulation device is moved.

## Description

The present invention relates to a milking parlour and a method for operating the same and particularly, but not exclusively, to a rotary milking parlour for milking an animal, such as a cow, and to a method for operating the same.

There are various types of milking parlour known in the dairy industry and the present invention is of particular relevance to what is commonly referred to as a rotary milking parlour. This type of parlour is provided with a comparatively large number of milking stalls arranged in a circular configuration on a rotating annular platform and is of particular use in handling a large number of animals. The platform rotates at a relatively low constant speed so that a cow may readily step onto the platform from a stationary holding bay and thereby gain access to a stall. If deemed necessary by an operator, the rotary movement of the platform may be stopped momentarily in order to allow a cow sufficient time to enter (or exit) the platform. The continued rotation of the platform then moves the stall into a position where an operator can perform certain tasks (such as teat cleaning and placement of teat cups on the teats) so as to allow the milking process to begin. The speed of rotation is such that the milking process will have been completed by the time a stall has moved from the cow entry position (where a cow gains entry onto the platform) to a cow exit position (where a cow is permitted to leave the platform). The cow entry and exit points are adjacent one another so as to maximise the time a cow spends in the milking stall.

It will be understood that cows may constantly enter and exit a rotary parlour without necessarily stopping the platform rotation and this allows for a large number of cows to be handled. It will be also understood that the movement of the platform results in cows being brought to an operator in turn. The operator is therefore able to remain in one location and concentrate on essential milking tasks without interruptions.

There are two main types of rotary milking parlour system, which may be referred to as the Parallel Rotary system and the Herringbone Rotary system.

In a Herringbone Rotary system, a cow stands in a stall facing diagonally towards the outside of an annular rotating platform, in the general direction of rotation. One or more operators stand on the inside of the rotating platform and are thereby provided good access to the side of each cow. Milking equipment is positioned alongside each cow on the inside edge of the platform.

In a Parallel Rotary system, a cow stands in a stall of a rotating platform so as to face radially inward towards the centre of rotation of the platform. Operators stood outside the rotating platform are then able to work from the rear of each cow as the cow passes in turn. Because the cows are positioned side by side, the parallel rotary system allows more cows to be accommodated in the same space.

In each of these types of rotary parlour, each milking stall is provided with a cluster of four teat cups. These teat cups are attached to the teats of a cow located within the stall so as to allow said cow to be milked. Once the milking process has been completed, an automatic retraction system is typically used to remove the four teat cups simultaneously from the teats. Such a system comprises a cord which is attached to the teat cup cluster and which is retracted automatically at an appropriate time so as to pull the teat cup cluster from the cow.

A problem associated with rotary milking parlours is that an operator only has a limited amount of time in which to service a milking stall before the milking stall moves beyond the reach of the operator. An operator may service a milking stall in a number of ways, for example, an operator will typically service a milking stall by moving teat cups from a storage position into a position where they are attached to the teats of a cow stood within the milking stall. Although a teat cup cluster will be typically attached to the teats of a cow before the milking stall has moved a significant distance, unpredictable events such as movement by an unsettled cow can significantly delay the teat cup attachment process. This is not necessarily problematic when a human operator services the milking stalls because the operator can walk with the rotating platform and remain with the particular stall experiencing the delay. However, delays in servicing a stall can be problematic in circumstances where a robot arm is being used for the servicing activity. This is because the robot arm has a fixed position within a milking parlour and so a milking stall will tend to move quite rapidly beyond its reach. This problem is also a particular issue when the speed of the milking stalls is comparatively high. This may be found in large rotary parlours where the linear tangential speed of a stall will be comparatively high for a given angular speed because of the comparatively large platform radius.

A first aspect of the present invention provides a milking parlour comprising a robotic manipulation device having a robot arm and a milking stall provided on a platform moveable relative to the robotic manipulation device; characterised in that the milking parlour further comprises an extendable element with which the robotic manipulation device is moved.

A second aspect of the present invention provides a method of operating a milking parlour wherein the milking parlour comprises a robotic manipulation device having a robot arm, a milking stall provided on a platform moveable relative to the robotic manipulation device, and an extendable element with which the robotic manipulation device is moved; the method comprising the step of extending said element in the direction of movement of the platform.

A third aspect of the invention provides a milking parlour comprising a milking stall and a robotic manipulation device, characterised in that the robotic manipulation device comprises at least seven axes of movement.

It will be understood that through use of the present invention, a robotic manipulation device may be provided with additional time to service a milking stall. It will also be appreciated that the present invention thereby allows the speed of a milking stall to be increased. If necessary, the rate at which the robotic manipulation device is found to be completing a current activity (i.e. the performance of the robotic manipulation device) can be used to determine whether or not to use the means by which the additional time is provided. In other words, the performance of a robotic manipulation device may be such that the use of an associated second robotic manipulation device is not required.

Further advantageous optional features of the invention are set out in the appended dependent claims.

An embodiment of the present invention will now be described with reference to the accompanying drawings, in which:
Figure 1 is a schematic perspective view of a parallel rotary parlour according to the present invention;
Figure 2 is a schematic part plan view of the rotating platform of the parlour shown in Figure 1 wherein the platform is in a first rotary position and a robotic arm is moving teat cups one by one from a teat cup magazine to the teats of a cow;
Figure 3 is a front view of a seven axes robotic arm; and
Figure 4 is a side view of the seven axes robotic arm of Figure 3.

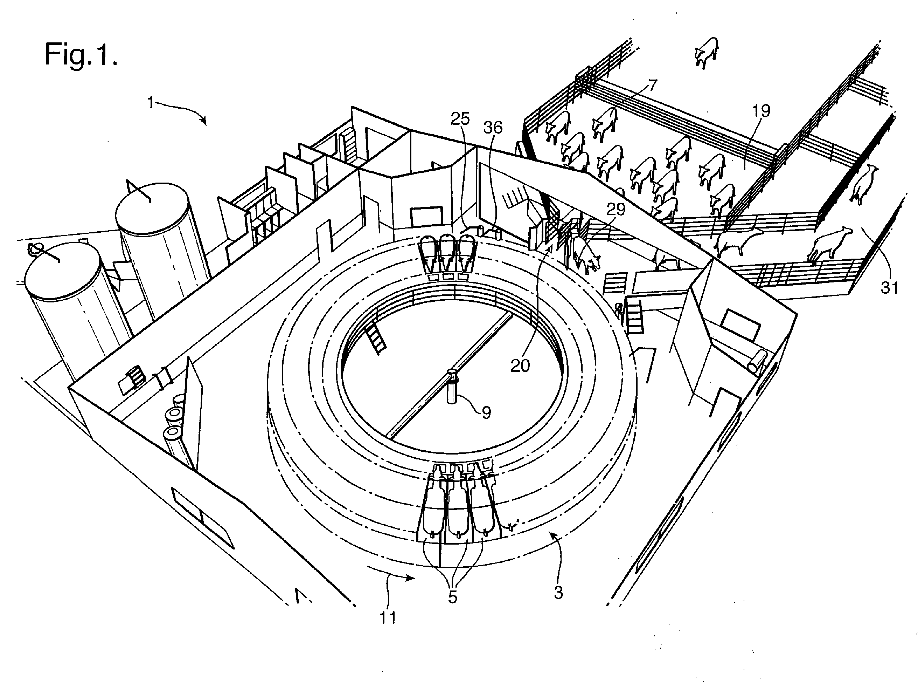

A parallel rotary parlour 1 according to the present invention is shown in Figure 1 of the accompanying drawings. The parlour 1 comprises a rotatable platform 3 having an annular shape and being provided with fifty milking stalls 5 arranged side by side circumferentially along the platform 3. Since the parlour 1 is of a parallel rotary type, the stalls 5 are arranged so that a cow 7 to be milked stands in a stall 5 facing radially inwards towards the centre 9 of rotation of the platform 3. In use, the platform 3 is rotated by suitable drive means in an anticlockwise direction as indicated by arrow 11.

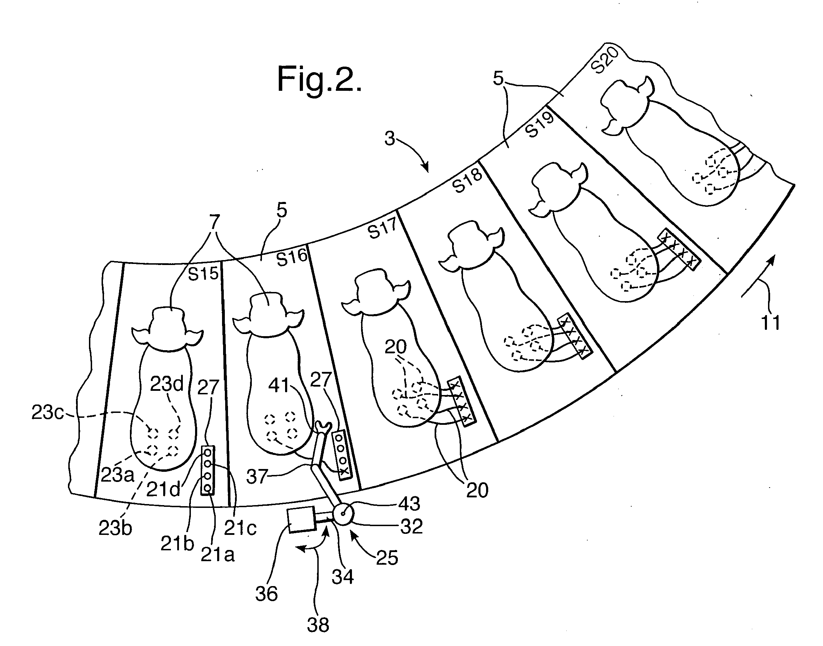

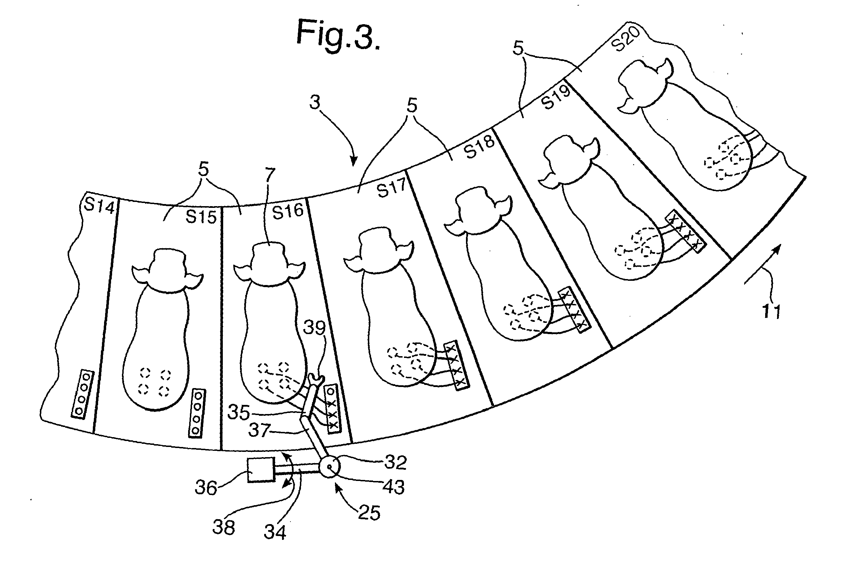

With reference to Figure 1, it will be understood that cows 7 to be milked congregate in a holding bay 19 and walk onto the platform 3 one by one at a stall entry point 20. It will be understood that the speed of rotation of the platform 3 is sufficiently low for a cow 7 to step onto the platform 3 and walk into a passing stall 5. It will also be understood that, once a cow 7 has entered a stall 5, further rotation of the platform 3 closes the stall 5 so as to prevent the cow 7 from backing out of the stall 5. Each stall 5 is provided with four teat cups connected to a conventional milking system by means of hoses. As will be explained in more detail below with reference to Figures 2 and 3, these teat cups 21a, 21b, 21c, 21d are automatically attached to the teats 23a, 23b, 23c, 23d of a cow by means of robot arm 25 which is moved by an electronic control system. Once the teat cups 21 are attached to the teats 23, the cow 7 is milked in a conventional fashion whilst the platform 3 continues to rotate. Once milking has been completed, the teat cups 21 are removed from the teats 23 by means of an automatic teat cup retraction system (not shown) which pulls on the hose 20 associated with each teat cup 21 and withdraws the teat cups 21 back into a teat cup magazine 27.

Each stall 5 is provided with a teat cup magazine 27 which comprises four recesses into which the four teat cups 23 locate when not in use. Each magazine 27 is located adjacent the entrance of the associated stall 5 so as to not unduly hinder access by a cow 7 to the stall 5 and so as to be positioned adjacent the rear of a cow 7 stood in the stall. The magazine 27 will therefore be understood to hold the teat cups 21 in a known storage position which is readily accessed by the robot arm 25 and which is sufficiently close to the teats 23 of the cow 7 to allow ready movement of the teat cups 21 to the teats 23 from the magazine 27.

Once the teat cups 21 have been retracted into the teat cup magazine 27, the milking stall 5 in which the cow 7 is located will shortly thereafter move to a stall exit point 29 (see Figure 1). At the exit point 29, a stall 5 is arranged in an open configuration so that a cow 7 located therein may back out of the stall 5 and leave the parlour 1 by means of an exit walkway 31.

As mentioned above, the rotary parlour 1 of the present invention is provided with an automated system for attaching teat cups 21 to the teats 23 of a cow 7 to be milked. This automated system comprises a robotic manipulation device having a robot arm 25 and an electronic control system. The electronic control system allows movement of the robot arm 25 to be coordinated with the rotary movement of the platform 3. More specifically, the control system ensures that the robot arm 25 is moved with the platform 3 so as to maintain a constant relative position between the robot arm 25 and a stall 5 being serviced, as will be described more fully below. Suitable means for monitoring the rotary speed and position and the direction of rotation of the platform 3 is provided (not shown) and this information is used by the control system in order to ensure accuracy in maintaining a constant relative position of the robot arm 25 and stall 5.

In Figure 2 and 3 of the accompanying drawings, six milking stalls (numbered S 15, S16, S 17, S 18, S 19 and S20) are shown moving past the robot arm 25. Alternative arrangements of robot arm 25 may be provided and the schematic example shown in Figures 2 and 3 is provided merely for the purposes of illustrating the operation of the present invention. Specifically, the robot arm 25 shown in Figures 2 and 3 comprises first and second arms 33, 35 rotatably connected relative to one another by means of an elbow joint 37. The robot arm 25 further comprises a teat cup gripper 39 for selectively gripping and releasing a teat cup. This gripper 39 is pivotally connected to the second arm 35 at a wrist joint 41. The robot arm 25 also comprises a swivel unit 32 from which the first arm 33 extends. The first arm 33 is rotatable about a central axis 43 by means of the swivel unit 32.

The swivel unit 32 of the robot arm 25 is mounted on a telescopically extendable element 34 which itself is mounted to the parlour floor by means of a base unit 36. It will be understood that the platform 3 rotates past the base unit 36 which remains in a fixed location in the parlour 1. The element 34 is telescopically extendable in a tangential direction relative to the platform 3 and the robot arm 25 may be thereby moved with the platform 3 so that the position of the robot arm 25 relative to a particular milking stall 5 may be maintained through a predetermined angle of platform rotation. It will be understood that this angle is, in part, determined by the extent to which the telescopic element 34 may be extended. Furthermore, in order to assist in maintaining a constant relative position between the robot arm 25 (specifically, the swivel unit 32) and the stall 5, the base unit 36 may be rotatable so as to allow the extendable element 34 to rotate in a plane parallel with the parlour floor (as indicated by arrow 38).

In Figure 2, the robot arm 25 is shown servicing the milking stall 5 numbered S16. The extendable element 34 carrying the robot arm 25 is configured in a telescopic retracted position. In other words, the distance between the base unit 36 and the swivel unit 32 of the robot arm 25 is the minimum possible.

The servicing activity to be undertaken by the robot arm 25 is the attachment of the teat cups 21 to the teats 23 of the cow 7 located within the stall numbered S16. Once the teat cup magazine 27 moves within reach of the gripper 39, the robot arm grasps a first teat cup 21a and moves said teat cup to an estimated position of a first teat 23a. The precise position of the first teat 23a is then determined in a conventional manner using an appropriate sensing device. Once the teat 23a has been accurately located, the robot arm then attaches the teat cup 21 a to the teat 23a. The first teat cup 21a is shown attached to the first teat 23a in Figure 2. This process is then repeated for the remaining three teat cups 21 b, 21 c, 21 d in turn as the stall 5 continues to rotate on the platform 3.

It will be understood, that in circumstances where the milking stalls 5 move comparatively quickly, the robot arm 25 will have limited time in which to attach all four teat cups 21 a, 21b, 21c, 21d to the four teats 23a, 23b, 23c, 23d of the cow 7 before the cow 7 moves beyond the reach of the robot arm 25. In these circumstances, the element 34 is telescopically extended in the general direction of rotation of the platform 3 (as shown in Figure 3) so as to increase the time during which the teat cup magazine 27 and teats of the cow 7 are within range of the robot arm 25. In the embodiment of Figures 2 and 3, the electronic control system extends the telescopic arm 34 so as to move the robot arm 25 at approximately the same speed as the stall numbered S 16 so as to maintain the relative positions of the robot arm 25 and said stall. However, an alternative control may be exercised over the extendable element 34. For example, the element 34 may be rapidly extended from a fully retracted position to a fully extended position just prior to the magazine 27 moving beyond the reach of the robot arm 25.

Once all four teat cups 21 have been attached to the teats 23 of the cow 7 (as shown in Figure 3), the electronic control system telescopically retracts the extendable element 34 so as to return the robot arm 25 to its original position relative to the base unit 36 (as shown in Figure 2). The robot arm 25 is then appropriately positioned to begin servicing the next milking stall 5 (numbered S15). The teat cup attachment process described above in relation to the stall numbered S16 is then repeated in respect of the stall numbered S15. In this way, the robot arm 25 services, in turn, each milking stall 5 on the rotary platform 3.

The robot arm 25 described above may be provided with one or more proximity sensors which detect when the robot arm is in close proximity to, for example, the leg of a cow 7 or an item of milking equipment.

Also, although only a schematic robot arm 25 has been described above for the sake of simplicity, prior robots used in the milking industry have up to six axes of movement and it is envisaged that similar robots would be used in practice in the milking parlours described herein. The six axes of movement each provide for rotary movement. The telescopically extendable element may be regarded as providing an additional seventh axis of movement.

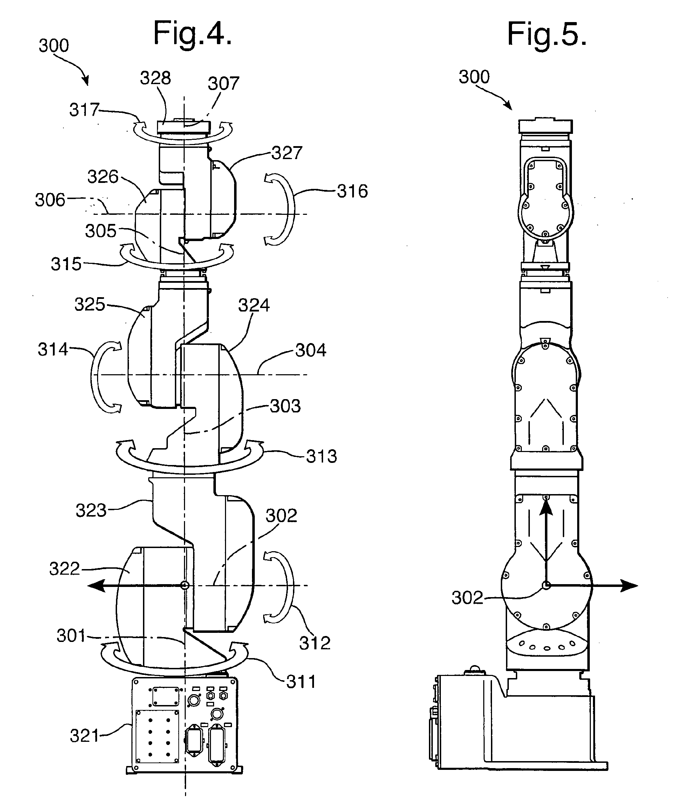

A robot arm 300 having seven axes of rotary movement is shown in Figures 4 and 5. This robot arm 300 has one axis 307 of movement in addition to the six axes 301, 302, 303, 304, 305, 306 of movement conventionally found in a milking robot, and this additional axis 307 of movement provides for greater flexibility of movement, which is helpful in obstacle avoidance. For example, the additional axis 307 is of particular assistance in avoiding obstacles (such as the legs of a cow or the hoses of teat cups attached to a cow) which do not have a fixed position and are, accordingly, typically detected by a proximity sensor on the robot arm. The additional axis was 307 is, however, also of assistance in avoiding obstacles (such as a teat cup magazine) which do have a fixed position, and would therefore have a location known to the control system.

With reference to Figures 4 and 5, it will be seen that the robot arm 300 comprises a base component 321 connected to a second component 322 so as to be rotatable relative thereto about the first axis 301 as indicated by arrow 311. The second component 322 is, in turn, connected to a third component 323 so as to be rotatable relative thereto about the second axis 302 as indicated by arrow 312. Similarly, the third component 323 is connected to a fourth component 324 so as to be rotatable relative thereto about the third axis 303 as indicated by arrow 313. Again, the fourth component 324 is connected to a fifth component 325 so as to be rotatable relative thereto about the fourth axis 304 as indicated by arrow 314. The fifth component 325 is connected to a sixth component 326 so as to be rotatable relative thereto about the fifth axis 305 as indicated by arrow 315. In addition, the sixth component 326 is connected to a seventh component 327 so as to be rotatable relative thereto about the sixth axis 306 as indicated by arrow 316. Finally, the seventh component 327 is connected to an eight component 328 so as to be rotatable relative thereto about the seventh axis 307 as indicated by arrow 317. It will be understood that each of the seven axes is arranged at 90° to the next axis. For example, the fourth axis 304 is oriented at 90° to the third axis 303 and the fifth axis 305.

The additional axis of movement is of particular use where two robots are employed in close proximity to one another, since the additional flexibility of movement provided by the additional axis allows the two robot arms to more readily avoid one another.

It will be understood that, whilst the seven axes robot arm 300 may be mounted so as to be moveable relative to the floor of the milking parlour (by means of a telescopically extendable element, for example), the arm 300 may alternatively be fixed to the parlour floor in a conventional fashion so as to remain stationary relative thereto.

The present invention is not limited to the specific embodiments described above. Alternative arrangements will be apparent to a reader skilled in the art. For example, a milking parlour may be provided with two or more robot arms for servicing different stalls, wherein each robot arm is itself moveable relative to the platform by means of an extendible element as described above. In other words, the arrangement of a robot arm 25 mounted on an extendible element 34, and which is itself mounted to the parlour floor by means of a base unit 36, may be replicated one or more times so as to allow more than one stall to be serviced simultaneously.

## Claims

1. A milking parlour comprising a robotic manipulation device having a robot arm, and a milking stall provided on a platform moveable relative to the robotic manipulation device; **characterised in that** the milking parlour further comprises an extendable element with which the robotic manipulation device is moved.

2. A milking parlour according to claim 1, wherein said element is extendable in the direction of movement of the platform.

3. A milking parlour according to claim 2, wherein said element is extendable at a speed which maintains the robotic manipulation device in a substantially constant position relative to the milking stall on the platform.

4. A milking parlour according to any of the preceding claims, further comprising an electronic control system for extending said element in response to the performance of the robotic manipulation device in servicing the milking stall.

5. A milking parlour according to claim 4, wherein the performance of the robotic manipulation device is the rate at which teat cups are attached to a cow during use of the milking stall.

6. A milking parlour according to any of the preceding claims, wherein said milking stall is one of a plurality of milking stalls, the plurality of milking stalls being provided on the moveable platform so as to move, in use, one after another past the robotic manipulation device.

7. A milking parlour according to any of the preceding claims, wherein the robotic manipulation device is carried by the extendible element or comprises the extendible element.

8. A milking parlour according to any of the preceding claims, wherein the extendible element is a telescopically extendible element.

9. A method of operating a milking parlour wherein the milking parlour comprises a robotic manipulation device having a robot arm, a milking stall provided on a platform moveable relative to the robotic manipulation device, and an extendable element with which the robotic manipulation device is moved; the method comprising the step of extending said element in the direction of movement of the platform.

10. A method according to claim 9, wherein said element is extended at a speed which maintains the robotic manipulation device in a substantially constant position relative to the milking stall on the platform

11. A method according to claim 9 or 10, wherein said element is extended in response to the performance of the robotic manipulation device in servicing the milking stall.

12. A method according to claim 11, wherein the performance of the robotic manipulation device is the rate at which teat cups are attached to a cow stood in the milking stall.

13. A method according to any of claims 9 to 12, wherein the robotic manipulation device is carried by the extendible element or comprises the extendible element.

14. A method according to any of claims 9 to 13, wherein the extendible element is a telescopically extendible element and the step of extending said element comprises telescopically extending said element.

15. A milking parlour comprising a milking stall and a robotic manipulation device, **characterised in that** the robotic manipulation device comprises at least seven axes of movement.

16. A milking parlour according to claim 15, further comprising eight components connected to one another consecutively by means defining seven axes of movement.

17. A milking parlour according to claim 16, wherein each of said at least seven axes of movement is a rotary axis allowing for relative rotation of components of said robotic manipulation device about said axis.

18. A milking parlour according to claim 17, wherein each axis is arranged at 90° to the next axis.

19. A milking parlour according to claim 15 or 16, wherein one of said at least seven axes of movement is a linear axis allowing for relative linear movement of components of said robotic manipulation device.

20. A milking parlour according to claim 19, wherein relative linear movement between consecutive components and along said linear axis is permitted by means of a telescopically extendable element.
